# EUROPEAN PATENT APPLICATION

(11) **EP 1 578 108 A2**
(43) Date of publication of application: **21.09.2005**
(21) Application number: 05251644.0
(22) Date of filing: 17.03.2005
(51) Int. Cl.: H04N 1/333

(54) **Apparatus and method for generating scanned data in a standard format**

(30) Priority: 19.03.2004 JP 2004080635
(71) Applicant: Ricoh Company, Ltd., Tokyo 143-8555 (JP)
(72) Inventor: Miyamoto, Isao, Ricoh Company, Ltd., Tokyo 143-8555 (JP); Kawamoto, Hiroyuki, Ricoh Company, Ltd., Tokyo 143-8555 (JP); Arai, Hiroshi, Ricoh Company, Ltd., Tokyo 143-8555 (JP); Ohkawa, Satoshi, Ricoh Company, Ltd., Tokyo 143-8555 (JP); Tone, Takeharu, Ricoh Company, Ltd., Tokyo 143-8555 (JP); Sugiyama, Naoki, Ricoh Company, Ltd., Tokyo 143-8555 (JP); Nishita, Taira, Ricoh Company, Ltd., Tokyo 143-8555 (JP); Ohyama, Maki, Ricoh Company, Ltd., Tokyo 143-8555 (JP)
(74) Representative: Leeming, John Gerard

(57) **Abstract**

The image processing apparatus includes a reader, a printer image generator, a storage device, and a data format converter. The reader reads an original image into original image data. The printer image generator generates printer image data corresponding to the original image data in a device-specific data format. The storage device stores the printer image data in the device-specific data format. The data format converter converts the printer image data from the device-specific data format to a standard data format, and sends the converted image data to a network.

## Description

The present invention relates to an apparatus and method for image processing, capable of scanning an original into data and generating the scanned data in a standard format.

Today's image forming apparatuses, such as digital copiers, have a function of storing image data in its own memory. For example, a digital copier reads an original image into image data using a scanning function, and stores the scanned image data in its memory. To print out the image data, the digital copier reads out the scanned image data from the memory, and forms a toner image based on the scanned image data. By storing the image data, the digital copier can reprint the same original, or it can rearrange pages in the original.

However, such a digital copier stores scanned image data in a device-specific format to save a memory space or to increase an image processing speed. This creates another problem when the digital copier is used in a network system.

For example, digital copier sends the scanned image data to a personal computer via a network. In order to display or edit the scanned image data, the personal computer needs to convert the scanned data for the device-specific format to a format readable by the personal computer, using a specific client software.

Exemplary embodiments of the present invention include an image processing apparatus, image processing method and a computer program product, each capable of scanning an original into data and generating the scanned data in a standard format.

In one exemplary embodiment, the image processing apparatus includes a reader, a printer image generator, a storage device, and a data format converter. The reader reads an original image into original image data. The original image includes any kind of data, such as graphic data, character data, binary data, and multivalue data, for example. The printer image generator generates printer image data corresponding to the original image data in a device-specific data format. The storage device stores the printer image data in the device-specific data format. The data format converter converts the printer image data from the device-specific data format to a standard data format, and sends the converted image data to a network. Once the printer image data is converted, the data format converter may send the converted image data to a network.

A more complete appreciation of the disclosure and many of the attendant advantages thereof will be readily obtained as the same becomes better understood by reference to the following detailed description of exemplary embodiments when considered in connection with the accompanying drawings, wherein:
FIG. 1 is a schematic block diagram illustrating a functional structure of an image processing apparatus according to an exemplary embodiment of the present invention;
FIG. 2 is a schematic block diagram illustrating a structure of a multifunctional apparatus according to an exemplary embodiment of the present invention;
FIG. 3 is a schematic block diagram illustrating a structure of a data format converter, according to an exemplary embodiment of the present invention;
FIG. 4 is a schematic block diagram illustrating a structure of a data format converter, according to another exemplary embodiment of the present invention;
FIG. 5 is a schematic block diagram illustrating a structure of an image processor shown in FIG. 4, according to an exemplary embodiment of the present invention;
FIG. 6 is a schematic block diagram illustrating a structure of a multifunctional apparatus according to another exemplary embodiment of the present invention;
FIG. 7 is a schematic block illustrating a structure of an image processor shown in FIG. 4, according to another exemplary embodiment of the present invention; and
FIG. 8 is a schematic block illustrating a structure of an image processor shown in FIG. 4, according to another exemplary embodiment of the present invention.

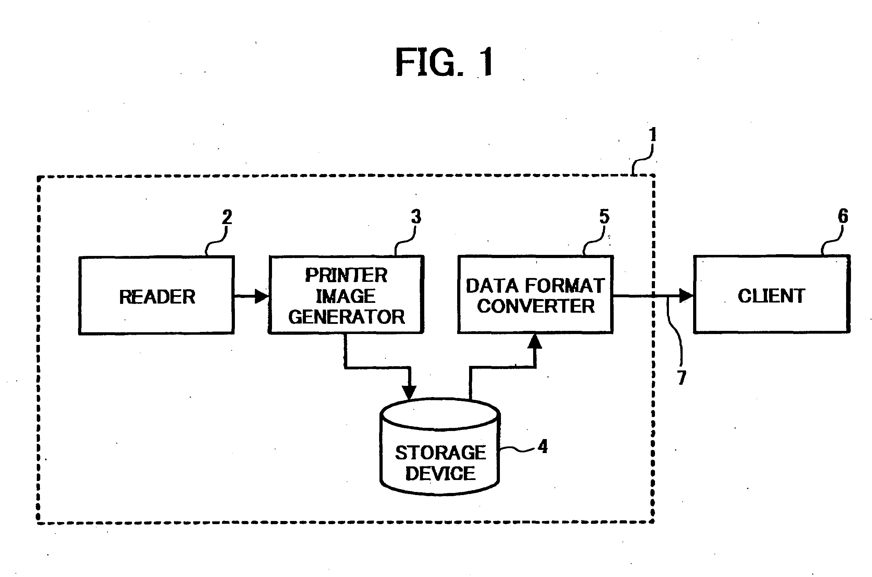

In describing preferred embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner. Referring now to the drawings, wherein like reference numerals designate identical or corresponding parts throughout the several views, particularly to FIG. 1, a description is made of an image processing apparatus 1 according to a preferred embodiment of the present invention.

The image processing apparatus 1 includes a reader 2, a printer image generator 3, a storage device 4, and a data format converter 5. The image processing apparatus 1, which is connected to a client 6 via a network 7, operates according to an instruction received from the client 6.

In an exemplary operation, the reader 2 reads an original image into original image data. The printer image generator 3 generates printer image data corresponding to the original image data in a device-specific compression format. The storage device 4 stores the printer image data in the device-specific compression format for future use.

If the client 6 instructs the image processing apparatus 1 to print the original image, the image processing apparatus 1 outputs the printer image data using a printer, which may be provided in the apparatus 1 or coupled to the apparatus 1. If the client 6 instructs the image processing apparatus 1 to send the original image data to the client 6, the data format converter 5 converts the printer image data from the device-specific compression format to a standard compression format, and sends the converted printer image data to the client 6 via the network 7.

In this exemplary embodiment, the device-specific compression format includes any kind of compression format previously defined by the apparatus 1. The standard compression format includes any kind of compression format widely used in various devices.

In another exemplary operation, the reader 2 reads an original image into original image data. The printer image generator 3 generates printer image data corresponding to the original image data in a device-specific file format. The storage device 4 stores the printer image data in the device-specific file format for future use.

If the client 6 instructs the image processing apparatus 1 to print the original image, the image processing apparatus 1 outputs the printer image data using a printer, which may be provided in the apparatus 1 or coupled to the apparatus 1. If the client 6 instructs the image processing apparatus 1 to send the original image data to the client 6, the data format converter 5 converts the printer image data from the device-specific file format to a standard file format, and sends the converted printer image data to the client 6 via the network 7.

In this exemplary embodiment, the device-specific file format includes any kind of file format previously defined by the apparatus 1. The standard file format includes any kind of file format widely used in various devices.

In another exemplary operation, the reader 2 reads an original image into original image data in a first device-specific color space. The printer image generator 3 generates printer image data corresponding to the original image data, in a second device-specific color space. The storage device 4 stores the printer image data in the second device-specific color space for future use.

If the client 6 instructs the image processing apparatus 1 to print the original image, the image processing apparatus 1 outputs the printer image data using a printer, which may be provided in the apparatus 1 or coupled to the apparatus 1. If the client 6 instructs the image processing apparatus 1 to send the scanned original image data to the client 6, the data format converter 5 converts the printer image data from the second device-specific color space to a standard color space, and sends the converted printer image data to the client 6 via the network 7.

In this exemplary embodiment, the first device-specific color space includes any kind of color space previously defined by the reader 2, such as color space based on an RGB model. The second device-specific color space includes any kind of color space previously defined by the printer image generator 3, such as a color space based on a CMYK model. The standard file format includes any kind of file format widely used in various devices.

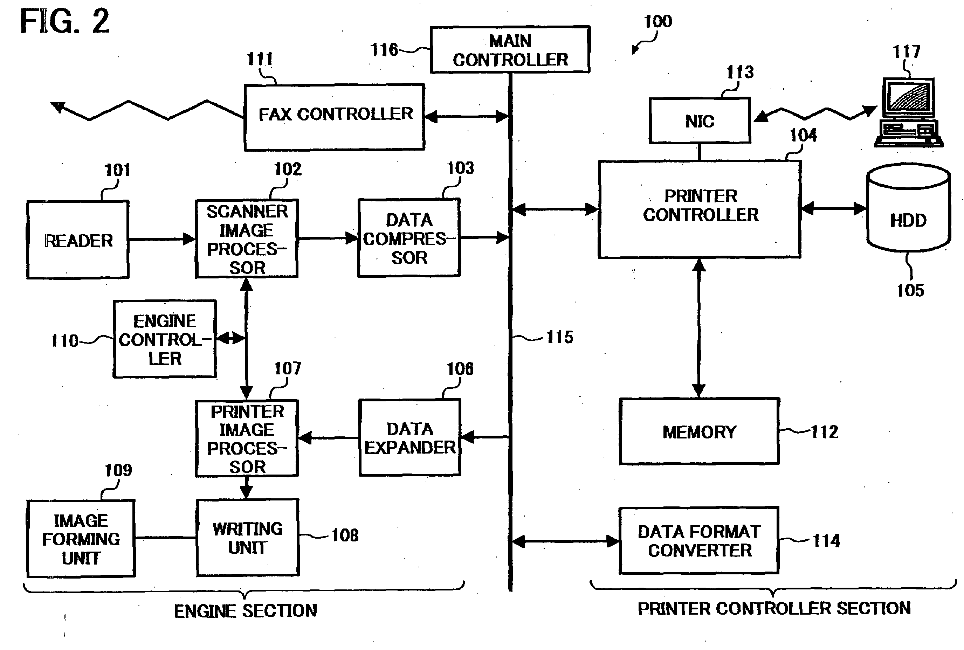

The image processing apparatus 1 of FIG. 1 may be implemented in various ways, for example, as a multifunctional apparatus 100 illustrated in FIG. 2. The multifunctional apparatus 100 has a function of storing an original image as image data in a device-specific compression format and sending the image data in a standard compression format to a client 117 via a network.

As shown in FIG. 1, the multifunctional apparatus 100 includes an engine section, a printer controller section, and a main controller 116, which are connected to one another via a bus interface 115. The client 117 includes any kind of apparatus having a user interface, such as a personal computer as illustrated in FIG. 1, or an image processing apparatus provided with an operational panel, for example. The apparatus 100 and the client 117 are connected to the network, such as a LAN (local area network), for example.

The main controller 116 includes any kind of processor, capable of controlling an entire operation of the multifunctional apparatus 100.

The engine section includes a fax controller 111, a reader 101, a scanner image processor 102, a data compressor 103, an engine controller 110, a data expander 106, a printer image processor 107, a writing unit 108, and an image forming unit 109.

The fax controller 111 controls transmission and reception of data with other apparatus through a public line. The reader 101 reads an original image into image data. The scanner image processor 102 applies predetermined scanner image processing to the image data received from the reader 101, such as scanner gamma correction, filtering, or resolution conversion, for example. The data compressor 103 compresses the processed image data in a device-specific compression format. The compressed image data is sent to the printer controller section via the bus interface 115, to be stored in the HDD 105, for example.

The data expander 106 expands the compressed image data, received from the printer controller section via the bus interface 115. The printer image processor 107 applies predetermined printer image processing to the expanded image data, such as printer gamma correction or halftone conversion, for example. The writing unit 108 forms a latent image according to the image data, received from the printer image processor 107. The image forming unit 109 forms a toner image according to the latent image.

The engine controller 110 includes any kind of processor, such as a CPU (central processing unit), capable of controlling the engine section.

The printer controller section includes an NIC (network interface controller) 113, a printer controller 104, a HDD (hard disk drive) 105, a memory 112, and a data format converter 114.

The NIC 113 controls data communication between the multifunctional apparatus 100 and other apparatus, such as the client 117, for example, via the network.

The memory 112 includes any kind of memory, which functions as a work area for the printer controller 104. The HDD 105 includes any kind of storage device or storage medium, capable of storing various data, including image data received from the engine section, job history data, or an image processing program of the present invention, for example.

If the image processing program is previously stored in the HDD 105, the printer controller 104 loads the image processing program onto the memory 104 to operate based on the image processing program. Alternatively, the image processing program may be downloaded via the network.

The data format converter 114 reads out the image data from the HDD 105, and applies format conversion to the image data before sending the image data to the client 117 via the network.

The printer controller 104 includes any kind of processor, such as a CPU, capable of controlling the printer controller section.

The multifunctional apparatus 100 performs at least one of operations including faxing, copying, printing, and scanning, according to a request received from the client 117.

The faxing operation includes receiving fax data from a sender apparatus, and storing the fax data in the HDD 105 for future use. The fax controller 111 expands the received image data, which has been compressed in a sender format specific to the sender apparatus, and sends the expanded image data to the printer controller 104 via the bus interface 115. The printer controller 104 stores the expanded image data in the memory 112, and further in the HDD 105 for future use. Before storing the image data, the printer controller 104 compresses the image data in a device-specific compression format specific to the apparatus 100. Other exemplary embodiments in the faxing operation are disclosed in the European Patent Publication No. 1475951 ("'951 Patent Application) filed on May 7, 2004.

The copying operation includes reading an original image into image data and printing the image data as a printed image. In the reading operation, the reader 101 reads an original image into image data. The scanner image processor 102 applies predetermined scanner image processing to the image data. The data compressor 103 compresses the processed image data in a device-specific compression format specific to the apparatus 100. The compressed image data is sent to the printer controller 104 via the bus interface 115. The printer controller 104 stores the compressed image data in the memory 112 and further in the HDD 105.

In the printing operation, the printer controller 104 reads out the compressed image data from the HDD 105 onto the memory 112, and sends it to the data expander 106 via the bus interface 115. The data expander 106 expands the compressed image data. The printer image processor 107 applies predetermined printer image processing to the expanded image data. The processed image data is printed out as a printed image, using the writing unit 108 and the image forming unit 109. Other exemplary embodiments in the copying operation are disclosed in the European Patent Publication No. 1404104 ("'104 Patent Publication") filed on September 23, 2003.

The printing operation includes printing image data, received from the client 117, as a printed image. The printer controller 104 receives image data from the client 117, and stores it in the memory 112. At this time, the printer controller 104 preferably compresses the received image data in a device-specific compression format specific to the apparatus 100, and stores the compressed image data in the HDD 105. The image data is then printed out as a printed image, using the writing unit 108 and the image forming unit 109, as described above in the copying operation.

The scanning operation includes reading an original image into image data and sending the image data to the client 117. The reading operation is substantially similar to the reading operation described in the above copying operation. In the sending operation, the printer controller 104 reads out the image data, which has been compressed in a device-specific compression format, from the HDD 105 onto the memory 112. The image data is sent to the data format converter 114 via the bus interface 115. The data format converter 114 expands the compressed image data, and compresses the expanded image data in a standard compression format. The compressed image data is then sent to the client 117 via the NIC 113 and the network.

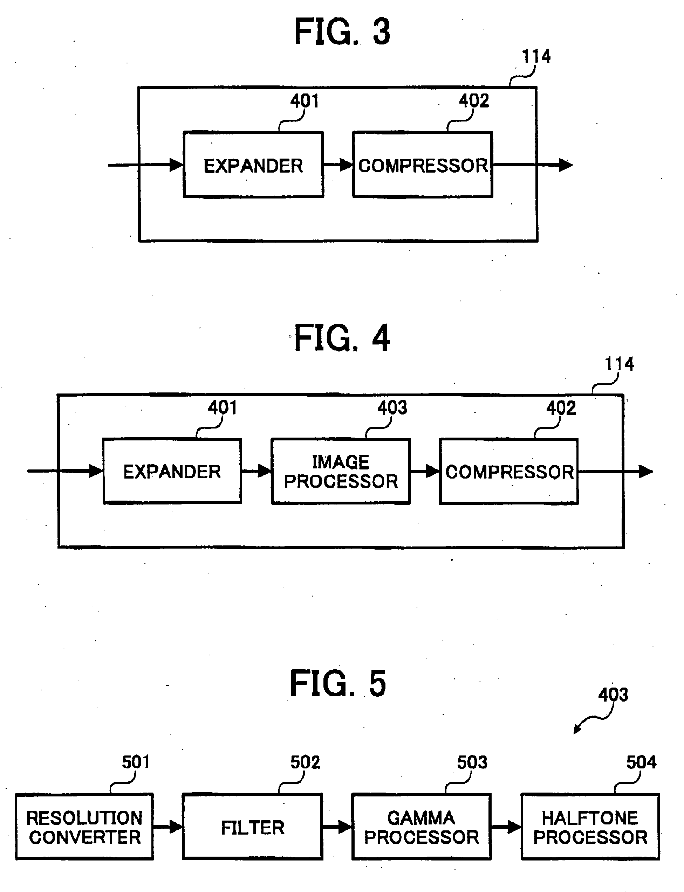

Referring now to FIG. 3, an exemplary structure of the data format converter 114 is explained.

The data format converter 114 includes an expander 401 and a compressor 402. The expander 401 expands image data, which has been compressed by the data compressor 103 or the printer controller 104, and sends the expanded image data to the compressor 402. The compressor 402 compresses the expanded image data in a standard compression format.

For example, binary or multivalue image data has been compressed in a device-specific compression format. The expander 401 expands the compressed image data, and sends the expanded image data to the compressor 402. The compressor 402 compresses the expanded image data in a standard compression format, such as MH, MR, or MMR in the case of binary image data, or JPEG or JPEG 2000 in the case of multivalue image data.

Referring now to FIG. 4, another exemplary structure of the data format converter 114 is explained. The data format converter 114 of FIG. 4 includes an image processor 403, in addition to the expander 401 and the compressor 402.

The image processor 403 applies image processing to the expanded image data, received from the expander 401. Referring to FIG. 5, the image processor 403 may include a resolution converter 501, a filter 502, a gamma processor 503, and a halftone processor 504.

In an exemplary operation, the reader 101 reads an original image into image data at 600 dpi. The image data is stored in the HDD 105, after being processed and compressed. The compressed image data is sent to the data format converter 114 for format conversion. The expander 401 expands the compressed image data, and sends the expanded image data to the image processor 403. The resolution converter 501 converts the resolution of the image data from 600 dpi to 300 dpi, for example. The filter 502 applies filtering to the image data, by using a modulation transfer function, for example. The gamma processor 503 applies gamma conversion to change density characteristics of the image data. The halftone processor 504 applies halftone processing to the image data. The processed image data of 300 dpi is then output to the compressor 402 to be converted to a standard compression format, and sent the client 117 via the NIC 113 and the network.

In addition to the above-described function, the multifunctional apparatus 100 of FIG. 2 may have a function of storing an original image as image data in a device-specific file format and sending the image data in a standard file format to the client 117 via the network.

In an exemplary operation, image data has been generated in a device-specific file format. The data format converter 114 converts the image data from the device-specific file format, such as JFIF (JPEG file interchange format), to a standard file format, such as TIFF.

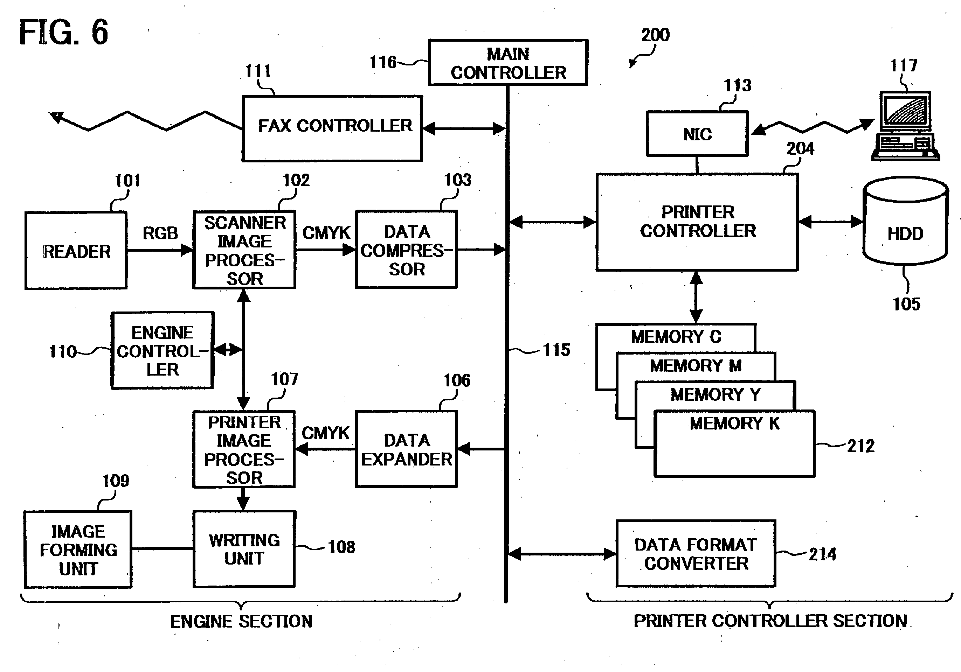

Referring now to FIG. 6, a multifunctional apparatus 200 is explained according to another preferred embodiment of the present invention.

The multifunctional apparatus 200 is substantially similar in structure to the multifunctional apparatus 100 of FIG. 2, except for a printer controller 204, a memory 212, and a data format converter 214.

In addition to the compression or file format conversion functions described above referring to FIG. 2, the apparatus 200 has a function of storing an original image as image data in a device-specific color space and sending the image data in a standard color space to the client 117 via the network.

In an exemplary operation, the reader 101 reads an original color image into image data in a device-specific RGB color space. The scanner image processor 102 applies predetermined scanner image processing to the image data, and converts the image data from the RGB color space to a device-specific CMYK color space. The data compressor 103 preferably compresses the processed image data in a device-specific compression format specific to the apparatus 200. The compressed image data is sent to the printer controller 204 via the bus interface 115. The printer controller 204 stores the compressed image data in the memory 212. In this exemplary embodiment, the memory 212 stores each of the colors components C, M, Y and K separately from one another. The printer controller 204 stores the image data in the HDD 105.

In the sending operation, the printer controller 204 reads out the compressed image data from the HDD 105 onto the memory 212, and sends it to the data format converter 214 via the bus interface 115. The data format converter 214 converts the image data from the CMYK color space to a standard color space based on the RGB model, such as sRGB or LAB. The converted image data is then sent to the client 117 via the NIC 113 and the network.

The data format converter 214 of FIG. 6 is substantially similar in structure to the data format converter 114 of FIG. 4, except that the image processor 403 includes at least a color space converter, capable of converting color space.

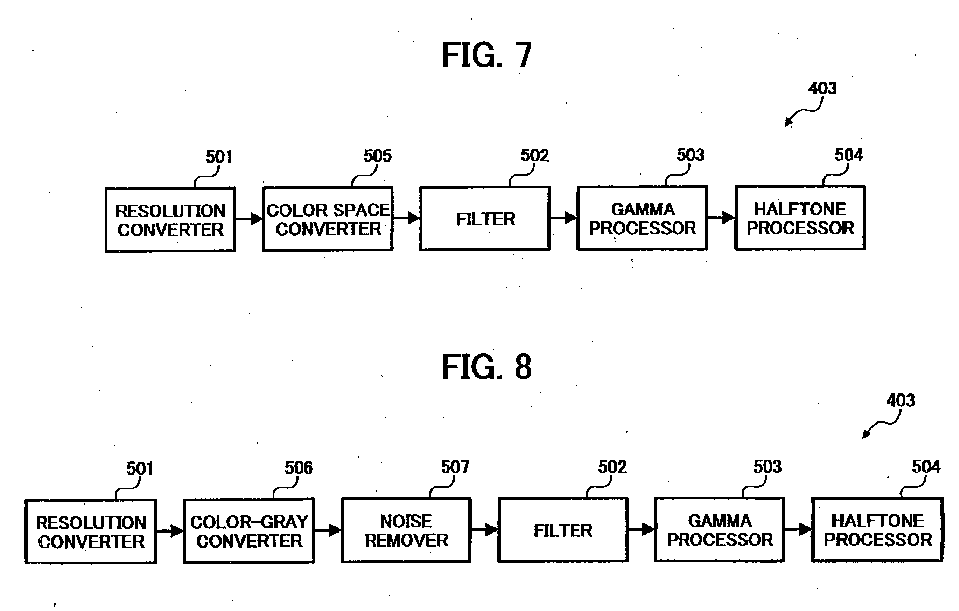

FIG. 7 illustrates an exemplary structure of the image processor 403 according to this exemplary embodiment. The image processor 403 includes the resolution converter 501, a color space converter 505, the filter 502, the gamma processor 503, and the halftone processor 504.

In an exemplary operation, the reader 101 reads an original color image into image data at 600 dpi. The image data is stored in the HDD 105, after being processed and compressed. The compressed image data is sent to the data format converter 214 for conversions. The expander 401 expands the compressed image data, and sends the expanded image data to the image processor 403. The resolution converter 501 converts the resolution of the image data from 600 dpi to 300 dpi, for example. The color space converter 505 converts the image data from the CMYK color space to a standard color space. The filter 502 applies filtering to the image data, by using a modulation transfer function, for example. The gamma processor 503 applies gamma conversion to change density characteristics of the image data. The halftone processor 504 applies halftone processing to the image data. The processed image data of 300 dpi is then output to the compressor 402 to be compressed in a standard compression format, and sent to the client 117 via the NIC 113 and the network.

In this exemplary embodiment, any kind of color conversion methods may be applied, such as a table interpolation method as disclosed in the '104 Patent Publication.

Further, the color space converter 505 may be provided with a function of converting color spaces other than the RGB or CMYK color space.

For example, as illustrated in FIG. 8, the CMYK color space may be converted to an RGB color space, and further to a grayscale space. The data format converter 214 of FIG. 8 includes the resolution converter 501, a color-gray converter 506, a noise remover 507, the filter 502, the gamma processor 503, and the halftone processor 504.

In an exemplary operation, the reader 101 reads an original color image into image data at 600 dpi. The image data is stored in the HDD 105, after being processed and compressed. The compressed image data is sent to the data format converter 214 for conversions. The expander 401 expands the compressed image data, and sends the expanded image data to the image processor 403. The resolution converter 501 converts the resolution of the image data from 600 dpi to 300 dpi, for example. The color-gray converter 506 converts the image data from the CMYK color space to a grayscale space via an RGB color space. The noise remover 507 suppresses noise in the image data. The filter 502 applies filtering to the image data, by using a modulation transfer function, for example. The gamma processor 503 applies gamma conversion to change density characteristics of the image data. The halftone processor 504 applies halftone processing to the image data. The processed image data of 300 dpi is then output to the compressor 402 to be compressed in a standard compression format, and sent to the client 117 via the NIC 113 and the network.

In this exemplary embodiment, any kind of noise suppression methods may be applied, such as an isolated point removing method as disclosed in the '951 Patent Publication.

Numerous additional modifications and variations are possible in light of the above teachings. It is therefore to be understood that within the scope of the appended claims, the disclosure of this patent specification may be practiced otherwise than as specifically described herein.

For example, in addition to the above-described exemplary image processing operations, the image processor 403 of FIG. 4 may perform other image processing operations, as disclosed in any one of the '951 Patent Publication and '104 Patent Publication, for example.

Further, an image processing operation performed by the data format converter in any one of the above-described exemplary embodiments may be performed by the data compressor 103 and the data expander 106, or by the printer controller 104 or 204.

Furthermore, elements and/or features of different illustrative embodiments may be combined with each other and/or substituted for each other within the scope of this disclosure and appended claims. For example, the image processing apparatus of the present invention may perform all of the functions including the compression format conversion, the file format conversion, and the color space conversion, or it may perform at least one of the functions.

This patent application is based on and claims priority to Japanese patent application No. JPAP2004-080635 filed on March 19, 2004, in the Japanese Patent Office, the entire contents of which are hereby incorporated by reference.

## Claims

1. An image processing apparatus, comprising:
a reader configured to read an original into original image data;
a printer image generator configured to generate printer image data corresponding to the original image data, in a device-specific data format;
a storage device configured to store the printer image data in the device-specific data format; and
a data format converter configured to convert the printer image data from the device-specific data format to a standard data format.

2. The apparatus of Claim 1, wherein the device-specific data format includes a device-specific compression format, and the standard data format includes a standard compression format.

3. The apparatus of Claim 2, wherein the data format converter includes:
an expander configured to expand the device-specific compression of the printer image data; and
a compressor configured to compress the expanded printer image data in the standard compression format.

4. The apparatus of Claim 2, wherein the data format converter includes:
an expander configured to expand the device-specific compression of the printer image data;
an image processor configured to apply image processing to the expanded printer image data; and
a compressor configured to compress the processed printer image data in the standard compression format.

5. The apparatus of Claim 1, 2, 3 or 4, wherein the device-specific data format includes a device-specific file format, and the standard data format includes a standard file format.

6. The apparatus of any one of the preceding Claims, wherein the first data format includes a device-specific color space, and the second data format includes a standard color space.

7. The apparatus of Claim 6, wherein the data format converter includes:
a color space converter configured to convert the printer image data from the device-specific color space to the standard color space.

8. The apparatus of Claim 7 when dependent on claim 2, wherein the data format converter includes:
an expander configured to expand the device-specific compression of the printer image data;
a color space converter configured to convert the expanded printer image data from the device-specific color space to the standard color space; and
a compressor configured to compress the converted printer image data in the standard compression format.

9. The apparatus of any one of the preceding Claims, wherein the device-specific data format includes a color space based on a CMYK model, and the standard data format includes a standard color space based on an RGB model.

10. The apparatus of any one of the preceding Claims, wherein the device-specific data format includes a color space based on a CMYK model, and the standard data format includes a grayscale space.

11. The apparatus of any one of the preceding claims, further comprising:
a sender configured to send the printer image data in the standard data format to an output device via a network.

12. The apparatus of any one of the preceding claims, wherein the data format converter is configured to further convert the printer image data from the standard data format to a specific format specified by an output device.

13. The apparatus of claim 12, further comprising:
a sender configured to send the printer image data in the specific format to the output device via a network.

14. A computer program product comprising program code means that, when executed by an image processing apparatus comprising a processor and a storage device configured to store said program code means, instruct the processor to perform an image processing operation including:
reading an original into original image data;
generating printer image data corresponding to the original image data in a device-specific data format;
storing the printer image data in the device-specific data format; and
converting the printer image data from the device-specific data format to a standard data format.

15. A computer program product according to claim 15 wherein the image processing operation further includes:
sending the printer image data in the second data format to an output device via a network.

16. A program product of Claim 14 or 15, wherein the image processing operation further includes:
applying image processing to the printer image data, with the processed image data being sent to the output device.

17. A computer readable medium storing a computer program product according to claim 14, 15 or 16.

18. An image processing method, comprising:
storing scanned image data in a device-specific format;
converting the scanned image data from the device-specific format to a standard format; and
sending the scanned image data in the standard format to a network.
